# EUROPÄISCHE PATENTSCHRIFT

(11) **EP 0 520 136 B1**
(45) Veröffentlichungstag und Bekanntmachung des Hinweises auf die Patenterteilung: **19.06.1996**
(21) Anmeldenummer: 92102785.0
(22) Anmeldetag: 20.02.1992
(51) Int. Cl.: A21D 8/02, A21C 11/02, A21D 13/00

(54) **Verfahren und Vorrichtung zur Herstellung von aus Hefeteig gebildeten Backprodukten**
Process and apparatus for making bakery products out of leavened dough
Procédé et appareil pour la fabrication d'un produit de boulangerie à partir de pâte levée

(30) Priorität: 24.06.1991 DE 4120807
(43) Veröffentlichungstag der Anmeldung: 30.12.1992
(73) Patentinhaber: DOBRA, D-27283 Verden (DE)
(72) Erfinder:
(74) Vertreter: Schirmer, Siegfried, Dipl.-Ing.

(56) Entgegenhaltungen:
- CH-A- 599 756
- GB-A- 2 005 979
- GB-A- 2 165 436
- GB-A- 2 218 371
- US-A- 4 116 119
- US-A- 4 417 867

## Beschreibung

Die Erfindung betrifft ein Verfahren zur Herstellung von aus Hefeteig gebildeten Backprodukten, bei dem aus dem Hefeteig Portionen mit einem vorgegebenen Gewicht gebildet und zu runden Ballen geformt werden, die einer Vorgärung unterzogen und anschließend auf einem umlaufenden Ablageband durch Preßstempel in einem Arbeitsgang zu einer runden, ebenen Teigplatte gepreßt werden, wobei wesentliche Teile der durch die Vorgärung im Teig entstandenen Gase im Teig eingeschlossen bleiben sowie eine Vorrichtung zur Durchführung des Verfahrens.

Bei den bekannten Verfahren zur Herstellung von aus Hefeteig gebildeten Backprodukten werden die ausgewirkten Teigrohlinge einem relativ kurzen Vorgärungsprozeß unterzogen, wodurch die Volumenzunahme gering ist. Der Kleber wird kaum durch die Hefe angegriffen und die Konsistenz der Teigballen ist nach Abschluß der Vorgärung noch sehr fest. Um die vorgegärten Teigballen in die vorgesehene runde Plattenform zu pressen, sind, bedingt durch das geringe Volumen infolge der kurzen Vorgärzeit, hohe Drücke erforderlich. Die so erhaltene Teigplatte ist aufgrund des geringen Volumens äußerst dünn. Zum Pressen werden die Teigballen in einem Backträger in Form eines Backbleches eingelegt. Durch den aufzubringenden hohen Preßdruck wird das durch die Vorgärung im Teig entstandene Gas nahezu ausgedrückt, so daß zur Erzielung einer porösen Teigplatte ein Nachgären erforderlich ist. Nach dem Backen werden die fertigen Teigplatten, die z. B. als Böden für Pizzen dienen, aus dem Backträger entfernt. Diese Entfernung erfolgt durch verschiedene Verfahrensschritte, überwiegend jedoch mittels Vakuumsaugern. Die Backträger müssen zur Vorbereitung auf eine neue Verwendung gereinigt und an die Ausgangsstelle zurückgeführt werden. Zum Pressen der Teigballen müssen nicht nur die Teigballen, sondern vor allem die Backträger exakt zentriert werden. Diese Verfahrensschritte sind aufwendig und verteuern die Herstellung der Backprodukte.

Aus der US-PS 4 696 823 ist ein Verfahren zur Herstellung eines pizzaartigen Teigerzeugnisses bekannt, bei dem in einem ersten Verfahrensschritt der Teigballen auf einem wesentlichen Teil seines Oberflächenbereichs flach gepreßt wird. In einem zweiten Verfahrensschritt wird die Teigplatte mit einer Vielzahl von Vertiefungen mit dazwischenliegenden Erhöhungen versehen, die das durch die Vorgärung im Teig vorhandene Gas aufnehmen. Zur Herstellung der Vertiefungen werden relativ aufwendige Vorrichtungen eingesetzt, wobei die Herstellung der Teigplatte eine entsprechende Zeit erfordert.

Die Teigplatte selbst ist nach ihrer Fertigstellung nicht gleichmäßig mit Gärungsgasen durchsetzt. Es wechseln sich Bereiche ohne Gärungsgas (Vertiefungen) und Bereiche mit Gärungsgas (Erhöhungen) ab, wobei der Übergang fließend ist. Abgesehen von den erforderlichen zwei Verfahrensschritten zur Herstellung der Teigplatte sind bei dem vorbekannten Herstellungsverfahren unbedingt Maßnahmen zur Verhinderung des Anklebens der Teigplatte erforderlich, z. B. durch Bemehlen der die Teigplatte tragenden Unterlage. Auf die Teigplatte werden unterschiedlich große Drücke ausgeübt, die im Bereich der Vertiefungen am größten sind. Da aus diesen Bereichen die Gärungsgase herausgepreßt bzw. herausgerollt sind, ist in diesen Bereichen ein erhöhter Anpreßdruck wirksam, der zum Ankleben in diesen Bereichen führt. Eine problemlose kontinuierliche Herstellung wird dadurch wesentlich aufwendiger, da die Träger (Förderband, zusätzliche Backträger) nicht nur bemehlt, sondern auch nach jedem Preßvorgang gereinigt werden müssen. Die direkte Überführung der Teigrohlinge vom Preßband auf das Backband ist nicht möglich.

Bei dem Verfahren nach der GB-A-2 165 436 soll ein sehr feinporiger, eine Art Klitschstruktur bildender Pizzateig hergestellt werden, bei dem der Pizzaboden zunächst entweder ausgerollt und ausgestochen oder in einer Form vorgepreßt wird und erst danach einer Gare von 25 bis 35 Minuten bei 30° bis 41°C und einer relativen Luftfeuchtigkeit vom 65 % bis 72 % unterzogen wird, um nach der ersten Alternative dieses Verfahrens anschließend bei einem Mindestpreßdruck von 1,3 KN - und zwar bei einem bereits der Preßform entsprechenden Durchmesser - zusammengepreßt und dann unter Vermeidung der Neubildung des beim Pressen zerstörten Porenbildes gebacken wird.

Nach diesem bekannten Verfahren wird der bereits auf die vorbestimmte Größe ausgerollte oder vorgepreßte Teig mit einem hohen Druck unter Zerstörung des Porenbildes zwischen erhitzten Preßplatten zusammengepreßt. Hierbei kommt es während des Pressens zum Schmelzen des im Teig vorhandenen Fettes, so daß ein die geschmacklichen Eigenschaften verschlechterndes Bestäuben mit Mehl nicht erforderlich ist.

Aus der GB-A-2 218 371 ist zu entnehmen, daß die Teigkugeln zunächst zwischen einer Andrückwalze und einem Endlosband abgeflacht werden, bevor sie auf dem Endlosband weiterverformt werden. Bei dieser bekannten Vorrichtung sind diverse Absaugelemente und Bürsten zur Reinigung des Förderbands angeordnet.

Der Erfindung liegt die Aufgabe zugrunde, ein Verfahren und eine Vorrichtung zur Herstellung von ebenen Teigplatten mit geringem Zeit- und Apparateaufwand anzugeben, wobei eine gleichmäßige Verteilung der Gärungsgase gewährleistet und ein Ankleben der Teigmassen auf dem gesamten Ablageband vermieden werden soll.

Diese Aufgabe wird erfindungsgemäß dadurch gelöst, daß die Teigballen mit einer Volumenvergrößerung auf mindestens das Dreifache ihres Ausgangsvolumens vorgegärt werden und die so gebildeten großvolumigen Teigballons mit entsprechend ihrer weichen Konsistenz begrenzter Druckkraft zu einer ebenen Teigplatte gepreßt werden, wobei die jeweilige Teigmasse an der Auflagefläche auf dem Auflageband erwärmt wird und das umlaufende Ablageband beheizbar ausgebildet ist.

Vorzugsweise beträgt die Vorgärzeit mindestens 30 Minuten, wobei die Vorgärung bei einer relativen Luftfeuchtigkeit von mindestens 40 % und bei einer Temperatur von mindestens 25°C durchgeführt wird. In Ausgestaltung der Erfindung wird der vorgegärte runde Teigballon auf ein endlos umlaufendes Band aufgebracht und in einer exakt vorgegebenen Bandposition durch den von oben angreifenden Preßstempel mit einstellbarem Druck zu einer runden Teigplatte gedrückt bzw. gepreßt. Es besteht die Möglichkeit, mehrere Teigballons, vorzugsweise drei Teigballoons, durch einen Preßstempel gleichzeitig zu runden Teigplatten zu drücken.

Bei der Vorrichtung zur Durchführung des Verfahrens kann das Band auch taktweise verfahrbar angeordnet sein, wobei bei jedem Takt die stationär angeordneten Preßstempel einen Preßvorgang ausführen. Das umlaufende Band kann vorteilhafterweise aus Fluor-Glasfiber oder Metall gebildet und beheizbar ausgebildet sein. Die Verwendung eines Fluor-Glasfiberbands ermöglicht relativ kleine Umlenkrollen, da ein solches Band außerordentlich elastisch ist. Das umlaufende Band kann mit Teflon oder Silicon beschichtet sein. Es liegt im Sinne der Erfindung, zur Herstellung von Backprodukten mit unterschiedlichem Durchmesser und mit unterschiedlicher Stärke die Preßstempel mit auswechselbaren Preßköpfen zu versehen, die beheizbar ausgebildet und mit einer inneren Beschichtung aus Teflon oder Silicon versehen sein können. Bei einer vorteilhaften Ausführungsform der Erfindung sind die Preßköpfe der Preßstempel mit einem äußeren vorstehenden Rand versehen. Es besteht die Möglichkeit, jedem Preßstempel unterhalb des Durchlaufbandes ein Gegenwiderlager zuzuordnen. Bei einer bevorzugten Ausführung der Erfindung ist der Preßstempel in Form einer Preßplatte ausgebildet, die eine über drei Teigballons reichende Länge aufweisen kann. Bei Einsatz dieser Preßplatte werden gleichzeitig mehrere, vorzugsweise drei Teigballons zu runden Teigplatten gepreßt.

Durch die erfindungsgemäß vorgesehene lange Vorgärzeit werden die Teigballen so aufgeschlossen, daß für das Pressen ein minimaler Druck ausreicht und dabei die Gärungsgase in der Teigplatte erhalten bleiben, so daß auf eine Nachgärung verzichtet werden kann. Der geringe Preßdruck trägt auch dazu bei, daß ein Ankleben des Teigrohlings vermieden wird. Durch das Pressen auf einem beheizbaren umlaufenden Band in Verbindung mit dem beheizbaren, einen vorstehenden Rand aufweisenden Preßkopf des Preßstempels kann auf die Verwendung zusätzlicher Backträger in Form von Backblechen verzichtet werden, da sich die Teigrohlinge leicht vom Preßband lösen lassen und dem Backband kontinuierlich zuführbar sind. Vorteilhaft ist auch das Vorbacken der runden Teigplatten auf dem umlaufenden Ablageband.

Für das erfindungsgemäße Verfahren wird nachfolgend ein Ausführungsbeispiel erläutert.

Der zur Verarbeitung gelangende Teig ist ein normaler Hefeteig, der durch Mischen und Kneten von Mehl, Wasser, evtl. Öl, Hefe sowie zur Geschmacksabrundung Zucker und Salz hergestellt ist. Aus diesem Teig werden unter Verwendung herkömmlicher Teigteiler Portionen von 160 Gramm hergestellt, die zu runden Teigballen geformt werden. Diese Teigballen werden nun bei einer relativen Feuchtigkeit von 60 % und bei einer Temperatur von 36 bis 38 °C einer Gärung unterzogen, die 30 Minuten beträgt. Nach Beendigung der vorgegebenen Vorgärzeit weisen die Teigballen ein relativ großes Volumen in Ballonform auf und besitzen eine weiche Konsistenz. Während der Vorgärzeit wird ein Teil des Klebergehalts abgebaut. Die ballonartigen Ballen werden auf ein beheiztes endlos umlaufendes Band aufgebracht und in exakt vorgegebenen Bandpositionen zentriert. Die von oben angreifenden Preßstempel brauchen nur einen mäßigen Druck auszuüben, um den weichen Teig auseinanderzudrücken. Der Durchmesser und die Höhe der Teigplatte werden durch den äußeren vorstehenden Rand des Preßkopfes des Preßstempels bestimmt. Ein Ankleben des Teigrohlings kann infolge des geringen Preßdruckes nicht eintreten. Hierzu trägt auch die beheizbare Ausbildung des Preßkopfes und des Durchlaufbandes in Verbindung mit der Beschichtung bei. Die vorstehenden Ränder der auswechselbaren Preßköpfe weisen unterschiedliche Durchmesser und unterschiedliche Höhen auf, so daß bei gleichem Teigvolumen unterschiedliche Restbestände des Gärungsgases zurückbehalten werden, woraus sich unterschiedliche Teigqualitäten ergeben. Die gepreßten Teigplatten lassen sich gut vom Durchlaufband zur weiteren Verarbeitung lösen, ohne daß ein Nachgären zwingend notwendig ist. Die gebackenen Platten bzw. nunmehrigen Böden werden danach je nach Wunsch belegt und frisch verpackt oder tiefgefroren den Kunden angeboten.

## Patentansprüche

1. Verfahren zur Herstellung von aus Hefeteig gebildeten Backprodukten, bei dem aus dem Hefeteig Portionen mit einem vorgegebenen Gewicht gebildet und zu runden Ballen geformt werden, die einer Vorgärung unterzogen und anschließend auf einem umlaufenden Ablageband durch Preßstempel in einem Arbeitsgang zu einer runden, ebenen Teigplatte gepreßt werden, wobei wesentliche Teile der durch die Vorgärung im Teig entstandenen Gase im Teig eingeschlossen bleiben, dadurch gekennzeichnet, daß die Teigballen mit einer Volumenvergrößerung auf mindestens das Dreifache ihres Ausgangsvolumens vorgegärt werden und die so gebildeten großvolumigen Teigballons mit entsprechend ihrer weichen Konsistenz begrenzter Druckkraft zu einer ebenen Teigplatte gepreßt werden, wobei die jeweilige Teigmasse an der Auflagefläche auf dem Ablageband erwärmt wird.

2. Verfahren nach Anspruch 1, dadurch gekennzeichnet, daß die Vorgärzeit mindestens 30 Minuten beträgt.

3. Verfahren nach Anspruch 1 oder 2, dadurch gekennzeichnet, daß die Vorgärung bei einer relativen Luftfeuchtigkeit von mindestens 40 % und bei einer Temperatur von mindestens 25 °C durchgeführt wird.

4. Verfahren nach einem der Ansprüche 1 bis 3, dadurch gekennzeichnet, daß der vorgegärte runde Teigballon auf ein endlos umlaufendes Band aufgebracht und in einer exakt vorgegebenen Bandposition durch den von oben angreifenden Preßstempel mit einstellbarem Druck zu einer runden Teigplatte gedrückt bzw. gepreßt wird.

5. Verfahren nach einem der Ansprüche 1 bis 4, dadurch gekennzeichnet, daß mehrere Teigballons durch einen Preßstempel gleichzeitig zu runden Teigplatten gedrückt werden.

6. Verfahren nach Anspruch 5, dadurch gekennzeichnet, daß drei Teigballons durch einen Preßstempel gleichzeitig zu runden Teigplatten gedrückt werden.

7. Verfahren nach einem der Ansprüche 1 bis 6, dadurch gekennzeichnet, daß die runden Teigplatten auf dem umlaufenden Ablageband vorgebacken werden.

8. Vorrichtung zur Durchführung des Verfahrens nach einem der Ansprüche 1 bis 7, mit einem stetig umlaufenden Ablageband für die vorgegärten Teigballons bzw. die zusammengedrückten Teigplatten und dem Lauf des Bands angepaßten Preßstempeln, dadurch gekennzeichnet, daß das umlaufende Band beheizbar ausgebildet ist.

9. Vorrichtung nach Anspruch 8, dadurch gekennzeichnet, daß das Band taktweise verfahrbar angeordnet ist.

10. Vorrichtung nach Anspruch 8 oder 9, dadurch gekennzeichnet, daß das umlaufende Band mit Teflon oder Silicon beschichtet ist.

11. Vorrichtung nach einem der Ansprüche 8 bis 10, dadurch gekennzeichnet, daß das umlaufende Band aus Metall gebildet ist.

12. Vorrichtung nach einem der Ansprüche 8 bis 10, dadurch gekennzeichnet, daß das umlaufende Band aus Fluor-Glasfiber gebildet ist.

13. Vorrichtung nach einem der Ansprüche 8 bis 12, dadurch gekennzeichnet, daß der Preßstempel in Form einer Preßplatte ausgebildet ist.

14. Vorrichtung nach Anspruch 13, dadurch gekennzeichnet, daß die Preßplatte eine über drei Teigballons reichende Länge aufweist.

15. Vorrichtung nach einem der Ansprüche 8 bis 14, dadurch gekennzeichnet, daß die Preßstempel mit auswechselbaren Preßköpfen versehen sind.

16. Vorrichtung nach einem der Ansprüche 8 bis 15, dadurch gekennzeichnet, daß die Preßköpfe beheizbar ausgebildet sind.

17. Vorrichtung nach einem der Ansprüche 8 bis 16, dadurch gekennzeichnet, daß die Preßköpfe mit einer inneren Beschichtung aus Teflon oder Silicon versehen sind.

18. Vorrichtung nach einem der Ansprüche 8 bis 17, dadurch gekennzeichnet, daß die Preßköpfe mit einem äußeren vorstehenden Rand versehen sind.

19. Vorrichtung nach einem der Ansprüche 8 bis 18, dadurch gekennzeichnet, daß jedem Preßstempel unterhalb des Durchlaufbandes ein Gegendruckwiderlager zugeordnet ist.

## Claims

1. Method for the production of baked products formed of yeast dough, in which method portions of a preset weight are formed of the yeast dough and shaped into round balls which are subjected to a preliminary fermentation and subsequently on a circulating deposit belt pressed into a round planar dough plate in one operating step by press dies, wherein substantial parts of the gases, that have arisen in the dough due to the preliminary fermentation, remain enclosed in the dough, characterised thereby, that the dough balls are preliminarily fermented with a volume increase to at least three times their initial volume and the dough balls of large volume thus formed are pressed by a pressure force, which is limited according to their soft consistency, into a planar dough plate, whilst the respective dough mass is heated at the bearing surface on the deposit belt.

2. Method according to claim 1, characterised thereby, that the preliminary fermentation time amounts to at least 30 minutes.

3. Method according to claim 1 or 2, characterised thereby, that the preliminary fermentation is performed at a relative air humidity of at least 40% and a temperature of at least 25°C.

4. Method according to one of the claims 1 to 3, characterised thereby, that the preliminarily fermented dough ball is brought into an endless circulating belt and squeezed or pressed into a round dough plate in an exactly preset belt position by the press die engaging from above with a settable pressure.

5. Method according to one of the claims 1 to 4, characterised thereby, that several dough balls are squeezed into round dough plates at the same time by one press die.

6. Method according to claim 5, characterised thereby, that three dough balls are squeezed into round dough plates at the same time by one press die.

7. Method according to one of the claims 1 to 6, characterised thereby, that the round dough plates are baked preliminarily on the circulating deposit belt.

8. Device for the performance of the method according to one of the claims 1 to 7 with a constantly circulating deposit belt for the preliminarily fermented dough balls or the squeezed dough plates and with press dies adapted to the running of the belt, characterised thereby, that the circulating belt is constructed to be heatable.

9. Device according to claim 8, characterised thereby, that the belt is arranged to be movable cyclically.

10. Device according to claim 8 or 9, characterised thereby, that the circulating belt is coated with TEFLON or silicone.

11. Device according to one of the claims 8 to 10, characterised thereby, that the circulating belt is formed of metal.

12. Device according to one of the claims 8 to 10, characterised thereby, that the circulating belt is formed of fluoride glass fibre.

13. Device according to one of the claims 8 to 12, characterised thereby, that the press die is constructed in the form of a press plate.

14. Device according to claim 13, characterised thereby, that the press plate has a length reaching across three dough balls.

15. Device according to one of the claims 8 to 14, characterised thereby, that the press dies are provided with exchangeable press heads.

16. Device according to one of the claims 8 to 15, characterised thereby, that the press heads are constructed to be heatable.

17. Device according to one of the claims 8 to 16, characterised thereby, that the press heads are provided with an internal coating of TEFLON or silicone.

18. Device according to one of the claims 8 to 17, characterised thereby, that the press heads are provided with an outer protruding rim.

19. Device according to one of the claims 8 to 18, characterised thereby, that each press die is associated with a counterpressure counterbearing underneath the passage belt.

## Revendications

1. Procédé de fabrication de produits de cuisson à base de pâte à lever, selon lequel on forme des portions de pâte de poids prédéterminé et on réalise des balles rondes que l'on laisse préfermenter, puis on les presse sur une bande de réception, tournante avec un poinçon de presse au cours d'une opération pour former une plaque de pâte plane, ronde, la partie principale des gaz dégagés par la préfermentation dans la pâte restant incluse dans la pâte, caractérisé en ce que les balles de pâte sont préfermentées pour augmenter leur volume au moins jusqu'au triple de leur volume de départ et les ballons de pâte de grand volume ainsi obtenus et de consistance souple, sont pressés avec une force de pression limitée pour former une plaque de pâte, plane, la masse de pâte respective étant chauffée au niveau de la surface d'appui sur la bande de réception.

2. Procédé selon la revendication 1, caractérisé en ce que la durée de préfermentation est au moins de 30 minutes.

3. Procédé selon la revendication 1 ou 2, caractérisé en ce que la perfermentation se fait à une humidité relative de l'air d'au moins 40 % et à une température d'au moins 25°C.

4. Procédé selon l'une des revendications 1 à 3, caractérisé en ce que le ballon de pâte, rond, préfermenté est déposé sur une bande sans fin en circulation et dans une position exactement prédéterminée de la bande, il est pressé par un poinçon de presse agissant par-dessus, sous une pression réglable pour former une plaque de pâte ronde.

5. Procédé selon l'une des revendications 1 à 4, caractérisé en ce qu'en ce que plusieurs ballons de pâte sont simultanément comprimés par un poinçon de presse pour former des plaques de pâte rondes.

6. Procédé selon la revendication 5, caractérisé en ce que trois ballons de pâte sont comprimés simultanément par un poinçon de presse pour former des plaques de pâte rondes.

7. Procédé selon l'une des revendications 1 à 6, caractérisé en ce que les plaques de pâte rondes sont précuites sur la bande de réception en mouvement.

8. Dispositif pour la mise en oeuvre du procédé selon l'une des revendications 1 à 7, comprenant une bande de réception en circulation continue pour recevoir les ballons de pâte préfermentés ou les plaques de pâte comprimées et des poinçons de presse adaptés au mouvement de la bande, caractérisé en ce que la bande en circulation est chauffée.

9. Dispositif selon la revendication 8, caractérisé en ce que la bande est mobile pas à pas.

10. Dispositif selon la revendication 8 ou 9, caractérisé en ce que la bande en circulation est revêtue de Téflon ou de silicone.

11. Dispositif selon l'une des revendications 8 à 10, caractérisé en ce que la bande en circulation est en métal.

12. Dispositif selon l'une des revendications 8 à 10, caractérisé en ce que la bande en circulation est en fibres de verre au fluor.

13. Dispositif selon l'une des revendications 8 à 12, caractérisé en ce que le poinçon de presse est réalisé en forme de plaque de presse.

14. Dispositif selon la revendication 13, caractérisé en ce que la plaque de presse a une longueur suffisante pour recevoir trois balles de pâte.

15. Dispositif selon l'une des revendications 8 à 14, caractérisé en ce que le poinçon de presse est muni de têtes de presse interchangeables.

16. Dispositif selon l'une des revendications 8 à 15, caractérisé en ce que les têtes de presse sont chauffantes.

17. Dispositif selon l'une des revendications 8 à 16, caractérisé en ce que les têtes de presse sont munies d'un revêtement intérieur en Téflon ou silicone.

18. Dispositif selon l'une des revendications 8 à 17, caractérisé en ce que les têtes de presse sont munies d'un bord extérieur en saillie.

19. Dispositif selon l'une des revendications 8 à 18, caractérisé en ce qu'un appui est associé à chaque poinçon de presse en dessous de la bande en circulation.
